# EUROPEAN PATENT APPLICATION

(11) **EP 2 565 010 A1**
(43) Date of publication of application: **06.03.2013**
(21) Application number: 11180068.6
(22) Date of filing: 05.09.2011
(51) Int. Cl.: B29C 45/16, B29C 45/26

(54) **A moulding arrangement**

(71) Applicant: Ptah AB, 114 28 Stockholm (SE)
(72) Inventor: Franksson, Olof, 111 38 Stockholm (SE); Axelsson, Robert, 563 91 Gränna (SE)
(74) Representative: Holme Patent A/S

(57) **Abstract**

A moulding arrangement serves for at each stroke of an injection-moulding machine in which an injection mould (8,9) is mounted moulding articles (1), which is composed of components (2,3) made of different materials in cavities (10,11) formed in the injection mould (8,9) which in closed position comprises a number of cavities (10,11) corresponding each to the shape of one or more components (2,3) whereby identical cavities (10,11) are separated by angular distances and placed at equal distances from a central axis of the mould (8,9) and parts of the cavities (10,11) are formed in a separately movable section (14) of the movable mould half (8). The moulding arrangement comprises moreover an operation part (32) for displacing the section (14) to-and-fro between closed and open positions of the mould (8,9) and in open positions to turn the section (14) about said central axis angles corresponding to the angles between the cavities (10,11) to form whole cavities (10,11) in the mould (8,9) being in closed position. The moulding arrangement is capable of in each operation cycle producing articles composed of components made of each their material.

## Description

The invention relates to a moulding arrangement for at each stroke of an injection-moulding machine, in which an injection mould is mounted, moulding at least one article, which is composed of components made of different materials, by injecting the materials into cavities formed in the mould.

The invention also relates to a method for by means of the moulding arrangement producing articles composed each of components made of different materials.

The term different materials are here defined as materials, which have the same ore different physical properties and/ore different colors. The materials may e.g. be thermoplastic polymers like plastic.

In some cases requires the design of an article that the article has more different colors. In other cases is an article made of two or more materials for thereby improving the usability and/or the quality of the article. One of these materials can for example be an abrasion-proof or rubbery material, which at the same time also can have another color than the other materials.

An injection mould usually consists of a movable mould half, which directly or indirectly is fastened to a movable clamping plate of an injection-moulding machine and of a stationary mould half, which directly or indirectly is fastened to a stationary clamping plate of the injection-moulding machine.

In opposite surfaces of the mould halves are cavity halves machined, which in the closed mould together form whole cavities corresponding to the shape of the articles to be moulded.

In a known method for e.g. producing an article of two components made of each their material is a first component moulded in a first cavity of a mould clamped in an injection-moulding machine after which the first component manually or by means of a robot is transferred to a second cavity of the mould where the second material is injected onto the first component in a second operation cycle.

Carrying out this method for producing articles of more components made of different materials is however costly and time-consuming and requires moreover relatively large investments in machinery and tools.

An attempt to overcome these problems is known from the patent specification GB 1 392 074 describing a method for in one operation cycle producing an article consisting of two components made of each their material in one mould.

In this case is one side of the surface of the stationary mould half formed with cavity halves for a number of first components while the other side of the surface symmetrically is formed with cavity halves for the same number of finished articles whereby the movable mould halves is equipped with corresponding mould cores.

Between the two mould halves is placed a transporting plate, which by means of a drive shaft is both axially and turnable displaceable.

The transporting plate is formed with bores for allowing the cores to enter the respective cavities in the stationary mould half during a shot.

Opening the mould and retracting the cores from the transporting plate and the transporting plate from the stationary mould results in that the finished articles are falling out of their cavity halves in the stationary mould half while the moulded first components are pulled out of their cavities by being adhered to the transporting plate.

The transporting plate then is turned 180° whereby the moulded first components are brought into position in front of the cavities for the finished articles.

When being closed is the mould again ready for moulding a number of both first components and finished articles.

This known injection mould arrangement suffer however of that serious draw back that it is limited to be used for only moulding cup formed articles, since this arrangement cannot function without such cores.

The transverse extension of the transporting plate is moreover relatively large since said extension corresponds in the main to the extension of the mould.

The transporting plate therefore has a relatively large moment of inertia, which implies that the time for turning the transporting plate for each operation cycle need to be relatively large and the production capacity therefore corresponding little.

The arrangement can moreover hardly be converted to produce different products or at least only by replacing large parts of the arrangement.

The mechanism for axially displacing and turning the transporting plate is moreover complicated and furthermore unsteady functioning, especially because the moulded first components are not adhering securely to the transporting plate during the retracing and turning operation of this.

The above-mentioned disadvantages of the prior art moulding arrangements for injection moulding articles of different materials are according to the present invention remedied by,
in a first aspect of the invention providing a moulding arrangement of the kind mentioned in the opening paragraph which is adapted to be used to all kinds of articles,
in a second aspect of the invention providing a moulding arrangement of the kind mentioned in the opening paragraph by means of which articles of different materials can be moulded within one single operation cycle,
in a third aspect of the invention providing a moulding arrangement of the kind mentioned in the opening paragraph which quickly and easily can be converted to produce articles of different kinds,
in a fourth aspect of the invention providing a moulding arrangement of the kind mentioned in the opening paragraph which has a large capacity of production,
in a fifth aspect of the invention providing a moulding arrangement of the kind mentioned in the opening paragraph which has a steady function,
in a sixth aspect of the invention providing a moulding arrangement of the kind mentioned in the opening paragraph which has a simple and inexpensive structure, and
in seventh aspect of the invention providing a method for producing an article composed of components made of different materials by means of the moulding arrangement mentioned in the opening paragraph.

The novel and unique features of the invention consist in the fact that the moulding arrangement for moulding articles of different materials in an injection mould comprises that the mould in closed position comprises a number of cavities corresponding each to the shape of one or more components, that at least identical cavities are separated by angular distances and placed at equal distances from a central axis of the mould, that parts of the cavities are formed in a separately movable section of the movable mould half, and that the moulding arrangement comprises an operation part for displacing said separately movable section to-and-fro between closed and open positions of the mould and in open positions to turn the section about said central axis angles corresponding to the angles between the cavities so that the cavities in the section together with cavity halves in the remainder of the movable mould half and in the stationary mold half form whole cavities in the mold in its closed positions.

Thereby is obtained a moulding arrangement which advantageously has both a simple and inexpensive structure and a large production capacity too and which moreover is capable of being used to produce different articles made of different materials in one single cycle.

The separately movable section of the movable mould half can according to the invention be a movable carrier for releasable holding a support member, which in the open position of the mould serves to support the moulded components and articles.

Since the carrier only holds the support member and not the moulded components and articles can the carrier have a little transverse extension and therefore a little moment of inertia.

That implies that the carrier quickly can be turned an angle corresponding to the angles between the cavities whereby the moulding arrangement obtains a high capacity of production.

The article to be produced by means of the moulding arrangement can according to the invention be composed of more components.

In case of that the article is composed of at least two components can the support member in an expedient embodiment bring the support member to be a support for the moulded components and the article by according to the invention forming the mould with a first cavity for moulding a first integral unit consisting of the at least first component and the support member and with a second cavity for moulding a second integral unit consisting of the first integral unit and the at least second component so that the supporting function of the support member automatically becomes a part of the moulding process.

Often is a quantity of material moulded integrally with the moulded articles in form of sprues extending from the articles. Said sprues are normally severed from the respective articles in a subsequent operation upon removal of the article from the mould.

The operation cycle of the moulding arrangement according to the invention does however not allow such operation since the article to be moulded in form of the first or second integral unit are not removed from the mould directly after having been moulded. They are during operation instead turned simultaneously with the turning of the carrier with the moulded articles.

Said turning requires the mould to be opened sufficiently much to allow the extending sprues to perform such turning operation together with the moulded articles.

The movable mould half would therefore have to travel a little longer distance each time the mould is opened whereby the production capacity of the injection-moulding machine unfortunately is something reduced.

It is however still a serious problem that the sprues, when opening the mould, need to be pulled out of the injection inlets, in which the sprues are moulded, by means of a drawing power. Said drawing power could, if occasion should arise, namely pull the support member with the article free of its releasable attachment to the movable carrier whereby the support member with the article simply would get stocked in the fixed half of the mould so that the production of articles could not be carried out.

The production could therefore only be carried out on condition of that the releasable attachment of the support member to the movable carrier is stronger than the releasable attachment of the sprues to the injection inlets in the stationary mould half.

But even if this condition is fulfilled will the sprue, which is extending from the first integral unit, anyhow block the corresponding inlet for the sprue of the second integral unit after turning the carrier and closing the mould. That implies that production of the articles cannot be carried into effect in this way.

The production of articles can however be performed in another way but still only if the above-mentioned condition is fulfilled. The inlet for the sprue of the second integral unit is in this case displaced in relation to the sprue of the first integral unit after having been turned and a hole moreover is formed in the stationary mould half for admitting entrance of said sprue of the first integral unit when closing the mould.

The article will thereby be equipped with two extending sprues so that the consumption of material and thereby the costs is increased.

As it appears from the above-mentioned statements is the unique moulding arrangement of the invention thus not able to function satisfactory when the material as normal is injected into the cavities via inlets in which sprues are moulded.

According to the invention can that problem be solved by using injection nozzles, which are arranged for injecting the material directly into the cavities of the mould.

Thereby is advantageously achieved that sprues extending from the integral units are altogether not moulded whereby it is made possible easily to carry out the very particular operation cycle of the moulding arrangement according to the invention while at the same time reducing the costs of production.

According to the invention can the nozzles be placed in such way in the mould that the material is injected directly into that part of the cavities which corresponds to the shape of the support member.

Thereby is advantageously obtained that it is the support member only, which functions as sprue for the article to be molded and not any other sprues sticking out.

The sprue in form of the support member exists already as an important part of the moulding arrangement according to the invention and can therefore not be any obstruction for carrying out the operation cycle of the moulding arrangement contrary to sprues of that kind, which are moulded in inlets in the stationary mould half and require additional work and thereby costs for forming holes in the stationary mould, which are adapted to contain the out sticking sprues.

Another advantage obtained by using the support member of the invention as sprue consists in the fact that the ugly marks which the nozzle will leave on the moulded integrals units are leaved on the support member only, which anyhow is rejected, so that the finished articles are kept completely free from such disfiguring marks.

According to the invention can the nozzles for injecting the material directly into the cavities of the mould advantageously be a heat runner with a valve needle and a heating arrangement for keeping the materials sufficiently liquefied ore plasticized for effectively being injected into the cavities of the mould and for allowing the valve needle securely to be opened and closed and to save material costs too.

According to the invention can the support member in a succeeding step of the production be severed from the article, which then can be ejected from the mould.

The operation part of the moulding arrangement can in a preferred embodiment according to the invention comprise an axially displaceable ejector plate with ejector pins for in the open position of the mould ejecting the first and second moulded integral unit from the movable mould half without at the same time ejecting the support members from the carrier.

Thereby is advantageously obtained that the support member still are able to displace and turn the integral units in the open position of the mould.

In a preferred embodiment according to the invention can the operation part of the moulding arrangement comprise an axially displaceable drive shaft which is connected to the carrier and is adapted to displace the carrier in the open position of the mould so far towards the stationary mould half that the carrier can bring the integral units beyond the reach of the ejector pins in which position they freely can be turned by the carrier.

The operation part can, according to the invention, include turning means, which is able stepwise to turn the carrier angles corresponding to the angles between the cavities in the mould in one direction but not in the opposite direction.

Such turning means can in one embodiment of the invention be a ratchet mechanism disposed on the drive shaft or on the carrier on the drive shaft but is in a preferred embodiment according to the invention a gearwheel rim mounted on the drive shaft and a toothed bar meshing with the gearwheel rim.

Said gearwheel rim can according to the invention be mounted on the drive shaft via a free wheeling hub adapted to allow the gearwheel rim to turn the drive shaft into one direction but not into the opposite direction.

In an especially expedient embodiment according to the invention can the free wheeling hub be a free wheeling roller bearing, which is marketed by the German company, Stieber Germany under the designation, CSK20-P-2RS-C6 SF. Said free wheeling roller bearing allows advantageously the drive shaft width the carrier to repeatedly be nearly frictionless turned.

According to the invention comprises the operation part a sleeve which functions as a bearing application for the gearwheel rim which turnable is placed in said sleeve with the teeth of the gearwheel rim slidingly abutting the inner surface of the sleeve.

For allowing the toothed bar to mesh with the gearwheel rim can a transverse opening, according to the invention, be cut in the wall of the sleeve.

For being able to mould a satisfactory article is it necessary that the cavity halves in the mould half and the carrier fit precisely to the corresponding cavity halves in the stationary mould half in the closed position of the mould.

For securing that the carrier each time is turned precisely the predetermined angle between neighboring cavities in the mould is the operation part according to the invention adapted to turn the carrier less than said angle whereby the remainder of the turning operation is performed by means of at least one conical tap which is mounted upon the stationary mould part and is fitting into a corresponding recess formed in the carrier in the closed position of the mould.

The invention also relates to a method for producing an article composed of a first and a second component made of each their material by means of the moulding arrangement according to the invention.

This method comprises according to the invention that the moulding of the first integral unit, the moulding of the second integral unit, the severing of the article from the second integral unit and the ejecting of the support member from the mould all takes simultaneously place during each operation cycle. Thereby is advantageously obtained a high output of production.

Each operation cycle comprises moreover according to the invention the steps of, injecting the material into the closed mould, opening the mould, ejecting the first and second integral unit from the movable mould half without ejecting the support member from the carrier, displacing the carrier a distance further than the ejector pins, turning the carrier an angle corresponding to the angle between neighboring cavities in the mould, and closing the mould. The operation cycle is easy and secure to perform.

The invention will be explained in greater detail below, giving further advantageous features and technical effects and describing exemplary embodiments with reference to the drawing, in which
Fig. 1 shows in perspective an article to be produced by means of the moulding arrangement according to the invention and also a supporting member for during operating supporting the moulded components and articles,
Fig. 2 is a lateral view of an integral unit consisting of a first component of the article and the support member seen in fig. 1,
Fig. 3 is lateral view of another integral unit consisting of the first integral unit and the support member seen in fig. 1,
Fig. 4 shows, seen from the front, the movable mould half of a mould for moulding the article seen in fig. 1,
Fig. 5 shows, seen from the front, the stationary mould half of the mould for moulding the article seen in fig. 1,
Fig. 6 is a fragmentary view of a longitudinal section of a conical tap formed on the stationary mould half and co-operating with a recess formed in the movable mould half for lining up the two mould halves in relating to each other when closing the mould,
Fig. 7 is a horizontal cross section of the closed mould,
Fig. 8 is a vertical cross section of the closed mould,
Fig. 9 is a longitudinal cross section of an operation part of the moulding arrangement according to the invention,
Fig. 10 is a cross section taken along the line X - X in fig. Fig. 9,
Fig. 11 shows in a larger scale a longitudinal section of a detail of the operation part,
Fig. 12 shows fragmentary a cross section of the detail seen in fig. 11,
Fig. 13 shows a longitudinal vertical section of the moulding arrangement in the closed position of the mould,
Fig. 14 shows a longitudinal vertical section of the moulding arrangement in the open position of the mould,
Fig. 15 shows a longitudinal vertical section of the moulding arrangement in the open position of the mould where the second integral unit and a carrier for holding the second integral unit has been ejected from the movable mould half by means of ejector pins,
Fig. 16 shows the same but with the second integral unit displaced a further distance, and
Fig. 17 shows the same but with the second integral unit turned a predetermined angle so that the first integral unit now is in the same position as the second integral unit has been in fig. 16.

The article to be produced by means of the moulding arrangement according to the invention may be composed of more components made of each their material but in the following description is assumed that the article is composed of two components and that the material is a thermoplastic plastic which in a heated liquefied or plasticized state is injected into the cavities of the mould.

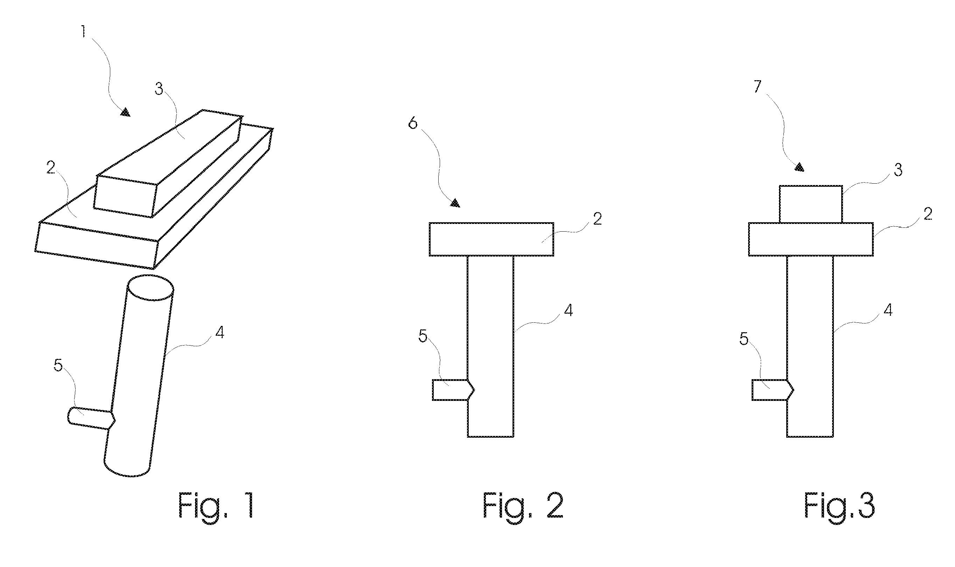

The article, which in fig. 1 is denoted the numeral 1 is composed of a first component 2 and a second component 3. In this case are the components each formed as a block with rectangular surfaces. Within the scope of the invention can the components however have any desired shape.

In fig.1 is separately also shown a support member 4, which in this case is formed as a cylinder with a lower anchor pin 5.

The support member can however within the scope of the invention have any other shape, e.g. be formed with a cross section like a rectangle or have a branched shape.

And the support member can within the scope of the invention also be equipped with more than one anchor pin, which also can have any convenient form.

The support member serves for supporting the integral units during an operation cycle of the moulding arrangement in a way, which later will be more specific explained simultaneously with that the function of the anchor pin will be explained.

The article 1 and the support member 4 are of illustrative reasons shown as separate parts in fig. 1.

But during an injection operation is in a first station of the mould moulded a first integral unit 6 consisting of the first component 2 and the support member 4, in a second station of the mould moulded a second integral unit 7 consisting of the first integral unit and the second component 3, in a third station of the mould is the second integral unit 7 severed into the support member 4 and the article 1, which here is brought to leave the mould, and in a fourth station of the mould is the support member 4 ejected from the mould.

The first integral unit 6 is shown in fig. 2 and the second integral unit 7 in fig. 3.

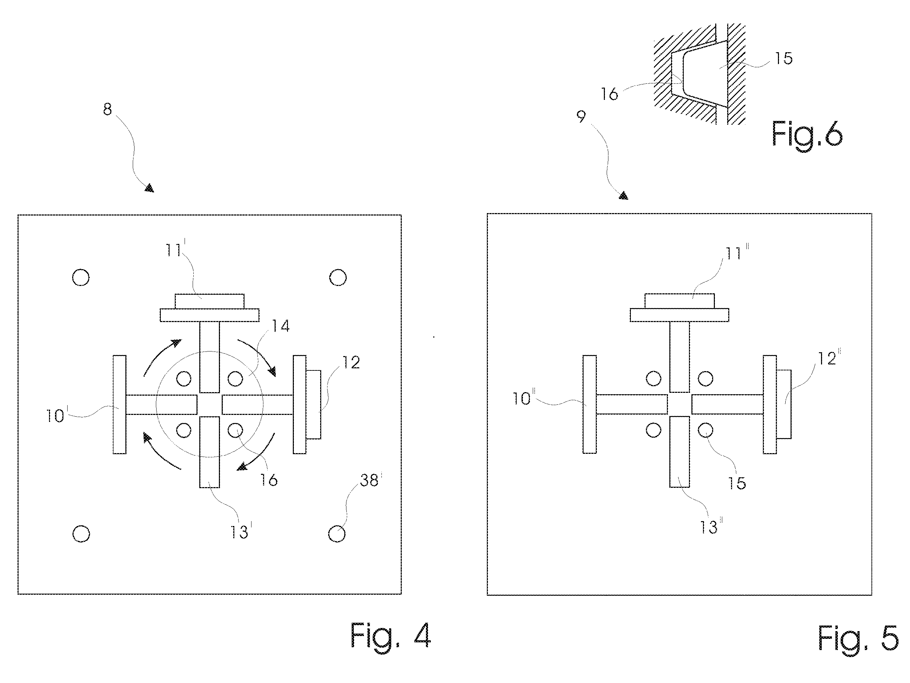

In fig. 4 is, seen from the front, shown the movable mould half 8 of a mould (not seen) and in fig. 5 the stationary mould half 9 of the mould.

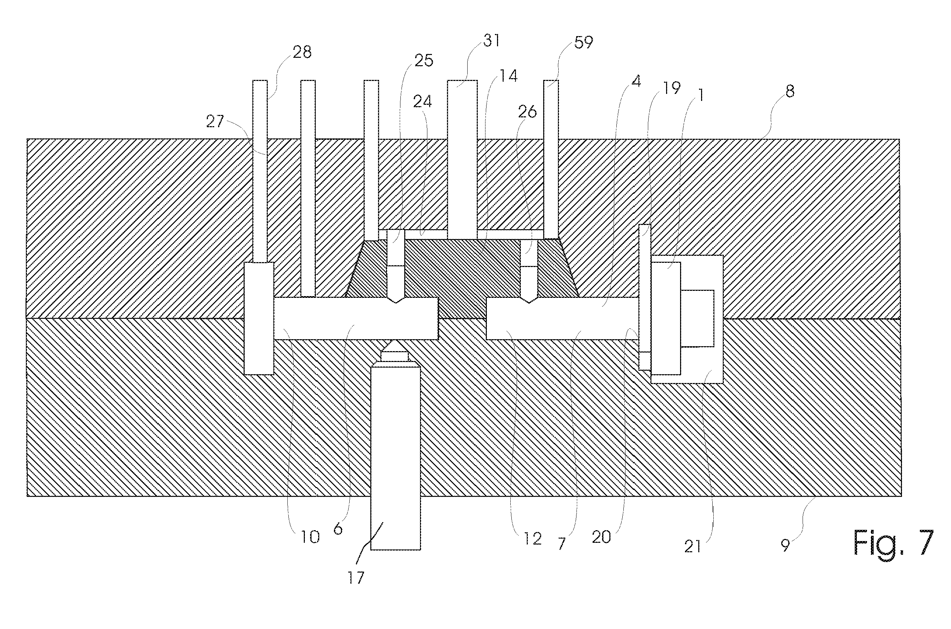

Cavity halves 10' and 10" are machined in the surface of the movable and stationary mould halves 8 and 9, respectively for in the closed mould 8,9, seen in fig 7, forming a cavity 10 for moulding the first integral unit 6, seen in fig. 2.

Other cavity halves 11' and 11" are machined in the surface of the mould halves 8 and 9, respectively for in the closed mould 8,9, seen in fig, 8, forming a cavity 11 for moulding the second integral unit 7, seen in fig. 3.

Cavity halves 12' and 12" are machined in the surface of the mould halves 8 and 9, respectively for in the closed mould 8,9, seen in fig. 7, forming a cavity for temporary holding the second integral unit 7 while being severed into article 1 and support member 4.

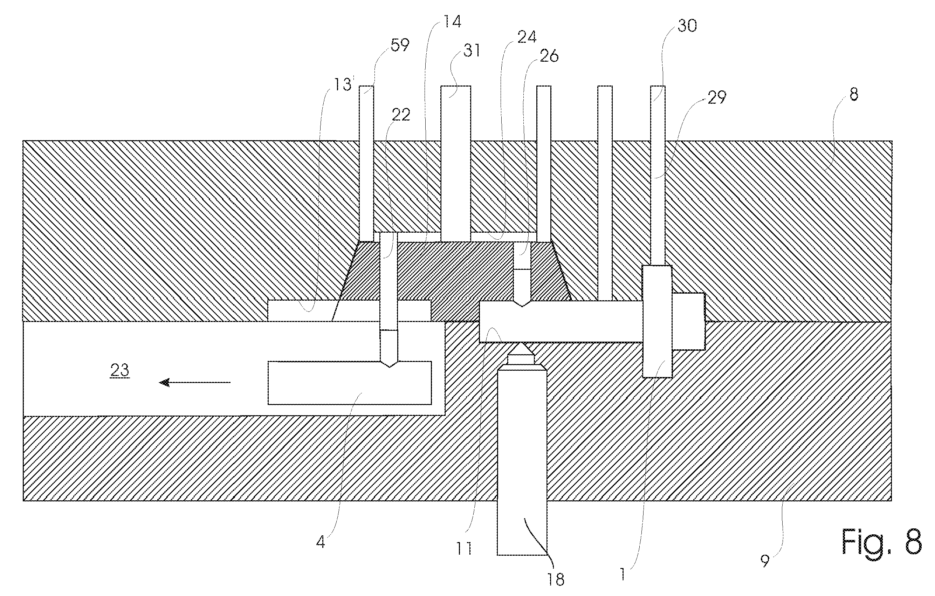

Cavity halves 13' and 13" are machined in the surface of the mould halves 8 and 9, respectively for in the closed mould 8,9, seen in fig. 8, forming a cavity for temporary holding the support member 4 until it finally is ejected from the mould.

A central section of the movable mould half 8 is formed as a separately movable carrier 14 for releasable holding the support members 4. The carrier is adapted to, in the open position of the mould, to be turned angles of in this case 90° into the direction of the shown arrows for thereby moving the support members with the integral units from one cavity in the mould to the next cavity.

The two mould halves need to be lined precisely up in relation to each other in the closed position of the mould so that the cavity halves fit precisely to each other and correctly formed articles thereby safely can be moulded at each stroke of the injection-moulding machine.

For securing that the cavity halves fit precisely to each in the closed position of the mould is the stationary mould half 9 equipped with, in this case, four conical taps 15 co-operating with opposite recesses 16 in the stationary mould half 8.

The conical surfaces of the taps 15 and the recesses 16, which fragmentarily is shown in a larger scale in fig. 6, are abutting each other in the closed position of the mould whereby the mutual angle position of the two mould halves always need to be the same as the predetermined angle position.

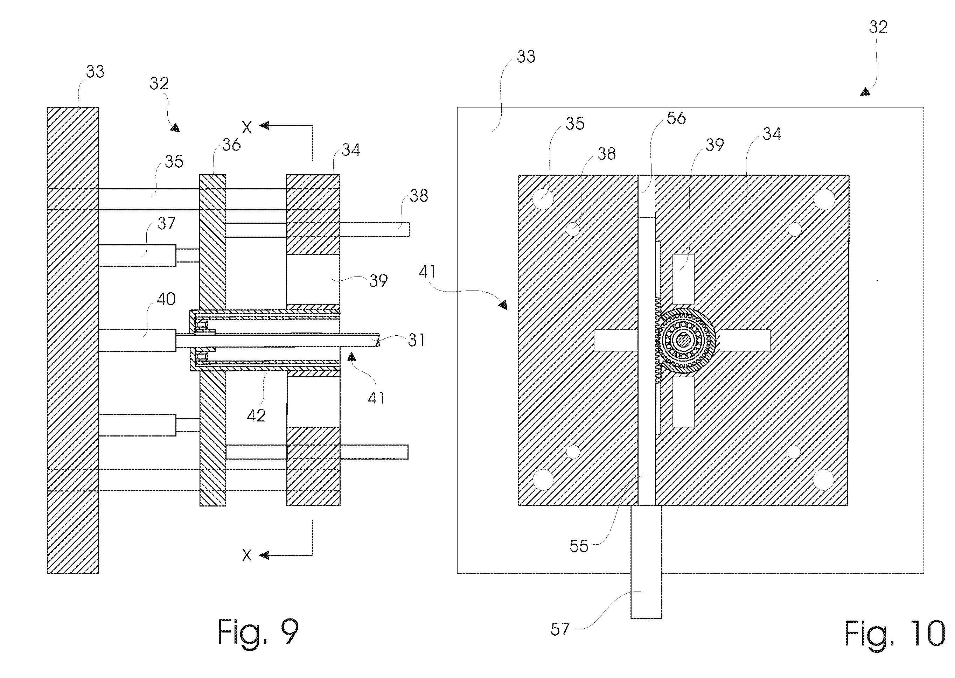

With the numeral 38' is in fig. 4 denoted through bores for returning rods 38, the function of which will be explained later with reference to fig. 9 - 17 of the drawing.

Fig. 7 and 8 shows the closed mold 8,9 in operative state, whereby fig. 7 is a horizontal cross section of the mould and fig. 8 a vertical cross section of the mould.

Fig. 7 shows a first injection nozzle or heat runner 17 for injecting the first material directly into that part of the first cavity 10 which corresponds to the shape of the support member 4, and fig. 8 shows a second injection nozzle or heat runner 18 for injecting the second material directly into that part of the second cavity 11 which similarly corresponds to the shape of the support member 4.

Thereby is advantageously obtained that it is the support member 4 only, which functions as sprue for the article to be moulded and not any separate sprues, which in fact would act as obstructions for performing the very particular operation cycle of the invention.

During closing of the mould is the second integral unit 7 in the cavity 12 of the mould severed into the article 1 and the support member 4 by means of a knife 19 on the movable mould half 8 co-operating with a cutting edge 20 on the stationary mould half 8 after which the article 1 is falling out of the mould via a first vertical channel 21 formed in the mould.

The above-mentioned operations take all simultaneously place in the closed position of the mould.

After opening of the mould is the carrier, as previously mentioned, turned 90° whereby the severed support member 4 is turned to the position of the cavity 13' in the movable mould half of the mould.

During closing the mould again for starting a new operation cycle is the support member 4, as seen in fig. 8, ejected from the carrier by means of an ejector pin 22, which is fastened to the movable mould half after which the released support member 4 is falling out of the closed mould via a second vertical channel 23.

As can be seen is the carrier formed as a conical disc 14 which fits into a corresponding conical recess in the movable mould half with a little distance to the bottom 24 of the recess. The conicities of the carrier and recess, respectively secure that the carrier always will be lined correctly up in the movable mould half when closing the mould.

As seen in fig. 7 secures a pin 25 on the bottom 24 of the recess that some of the first material for moulding the first integral unit 6 doesn't run out into the space between the bottom of the recess and the carrier via a bore 26 in the carrier during injecting of the first material into the cavity 10.

The movable mould half 8 is formed with ejector bores 27 and 29 for fractionary shown ejector pins 28 and 30 for ejecting the moulded integral units 6 and 7, respectively from the movable mould half 8.

In the closed position of the mould is the ejector pins positioned in such way that they block for the moulding cavities for thereby preventing that some of the injection materials run out into the ejector bores.

In fig. 7 and 8 is also seen a fraction of a drive shaft 31 for displacing and turning the carrier 14.

Fig. 9 and 10 shows an operation part 32, which comprises a rear plate 33 for clamping the unit to the movable plate, (not shown) of an injection-moulding machine, (not seen) and a front plate 34 for clamping the movable mould half 8 (not seen in fig. 9) to the operation part.

The two plates 33 and 34 are interconnected with four bars 35 upon which an ejector plate 36 slidingly is mounted. The injector plate 36 can be moved forwards in relation to the front plate by means of hydraulic cylinders 37.

Returning rods 38 are arranged for by engaging the stationary mould during closing of the mould pushing the ejector plate backwards after that the hydraulic cylinders 37 have pushed the ejector plate 36 forward for ejecting the moulded integral units by means of the ejector pins, (not seen in fig. 9).

The front plate 34 of the operation part is formed with through openings 39 for allowing ejector pins arranged in different groupings suiting to different articles to pass the front plate without needing to make new bores in the front plate each time a new article is going to be produced.

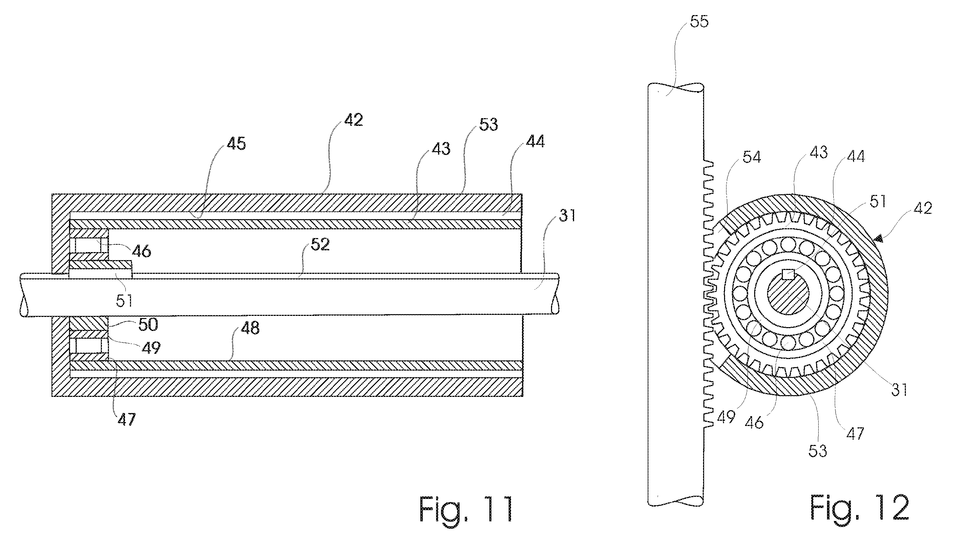

The drive shaft 31 is displaced forwards and backwards in relation to the front plate 34 by means of a hydraulic cylinder 40 and turned by means of a turning arrangement 41, which in a larger scale fractionally is shown in fig. 11 and 12.

The turning arrangement comprises a tubular sleeve 42 and a gearwheel rim 43, which turnable are placed in the sleeve with its teeth 44 slidingly abutting the inner side 45 of the tubular sleeve.

The gearwheel rim is moreover connected to the drive shaft via a freewheeling hub adapted to allow the gearwheel rim to turn the drive shaft into one direction but not into the opposite direction.

The freewheeling hub comprises in this case a freewheeling roller bearing 46 marketed by the German company, Stieber Germany under the designation, CSK20-P-2RS-C6 SF.

The freewheeling roller bearing 46 is with its outer race 47 fastened to the inner side 48 of the gearwheel rim 43 and with its inner race 49 to a muff 50 which again is coupled to the fractionally shown drive shaft 31 by means of a key 51 and slot 52 connection which allows the drive shaft axially to be displaced but not to be turned in relation to the muff.

In the wall 53 of the tubular sleeve 42 is cut a transverse opening 54, which allows a toothed bar 55 to mesh with the gearwheel rim 43 in the sleeve.

The toothed bar 55 can be displaced up an down in a guideway 56 which is formed in the front plate 34 of the operation part 32 of the moulding arrangement by means of a hydraulic cylinder 57. See fig 10.

The turning arrangement 41 of the invention functions in such way that the gearwheel rim 43 is turned an angle each time the hydraulic cylinder 57 are displacing the toothed bar 55 a predetermined distance in one direction from a base position.

As previously mentioned is it important that the mould halves are lined precisely up in relation to each and precisely in the same mutual position each time the mould is closed so that there each time is produced identical articles of high quality.

The turning arrangement therefore doesn't turn the drive shaft fully 90° but for example only 89,5°. The remaining 0,5° is turned when the surface of the conical taps 15 on the stationary mould half 9 abuts the surface of the conical recesses in the movable mould half or vice versa. See fig. 6.

In this way is effectively secured that the two mould halves always will be lined precisely up when the mould is closed.

That implies that the gearwheel rim turns the drive shaft and thereby the carrier at all 90°if said direction is the driving direction of the freewheeling roller bearing since the gearwheel rim is coupled to the drive shaft via the freewheeling roller.

After having turned the gearwheel rim 43 in the sleeve 42 as explained above is the toothed bar 55 withdrawn to its base position but now without turning the drive shaft 31 because the returning direction is chosen as the freewheeling direction of the freewheeling roller.

Since the drive shaft slidingly is mounted in the turning arrangement will the integral unit witch have been moulded in the previous operation cycle now be placed in the next cavity of the mould when closing the mould.

Within the scope of the invention can the turning arrangement also be formed in other ways.

Instead of the toothed bar for turning the gearwheel rim can the gearwheel rim thus be turned by a step motor, (not seen) with a pinion meshing with the gearwheel rim, and instead of the freewheeling roller bearing can a ratchet mechanism be used.

A step motor (not shown) ore a revolving hydraulic cylinder (not shown) can advantageously also be used for directly or indirectly turning the drive shaft 31.

As can be understood is the operation part 32 build in such a way that it nearly without any changing can be used to produce articles of different structures and designs whereby the unit advantageously can be permanently clamped to the movable platen of the injection-moulding machine.

Rearranging the moulding arrangement of the invention for producing a new article therefore quickly and easily can take place and with very small expenses to material and work too.

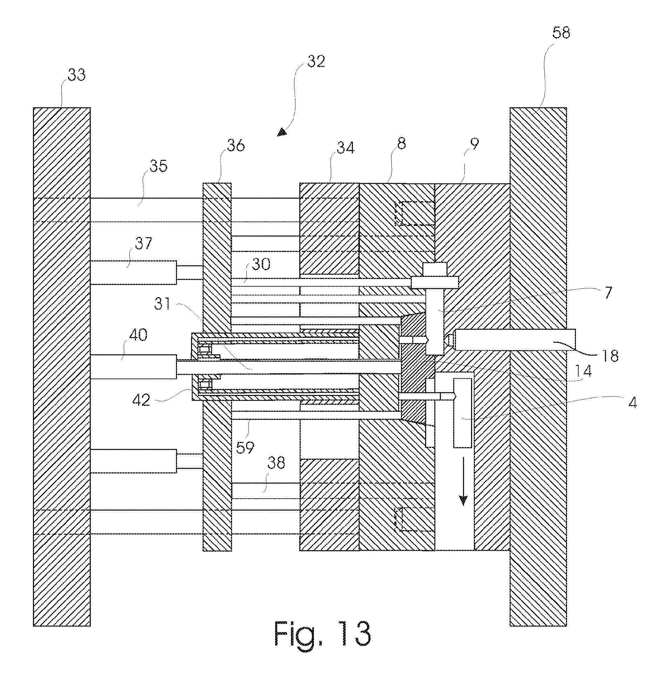

Fig. 13 - 17 illustrate the succeeding steps of an operation cycle performed of the moulding arrangement which here is shown in a longitudinal vertical section.

The movable mould half 8 is now mounted upon the front plate 34 of the operation part 32 shown in fig. 9 - 12 and the stationary mould half 9 is mounted upon the stationary platen of an injection-moulding machine, (not seen) by means of a clamping plate 58.

In fig. 13 is the moulding arrangement in its moulding mode. The operations, which take place when the moulding arrangement is in its moulding mode, are already discussed with reference to fig. 7 and 8.

Moulding of the first and second integral units 6 and 7 takes place while the mould 8,9 is closed.

The separation of the second integral unit 7 into the finished article 1 and the support member 4 and the ejection of the support member from the mould take however place during closing of the mould.

Since fig. 13 only shows a longitudinal section of the moulding arrangement is here only seen the second integral unit 7 in moulded state and the ejected support member 4.

The ejection pins 30 for ejecting the second integral unit 7 are extending all the way from this unit 7 to the ejector plate 36, which has been pushed back to its rearward position during the closing of the mould by means of the engagement of the return rods 38 with the front of stationary mould 58.

Also are seen ejector pins 59 for ejecting the carrier during an ejector step.

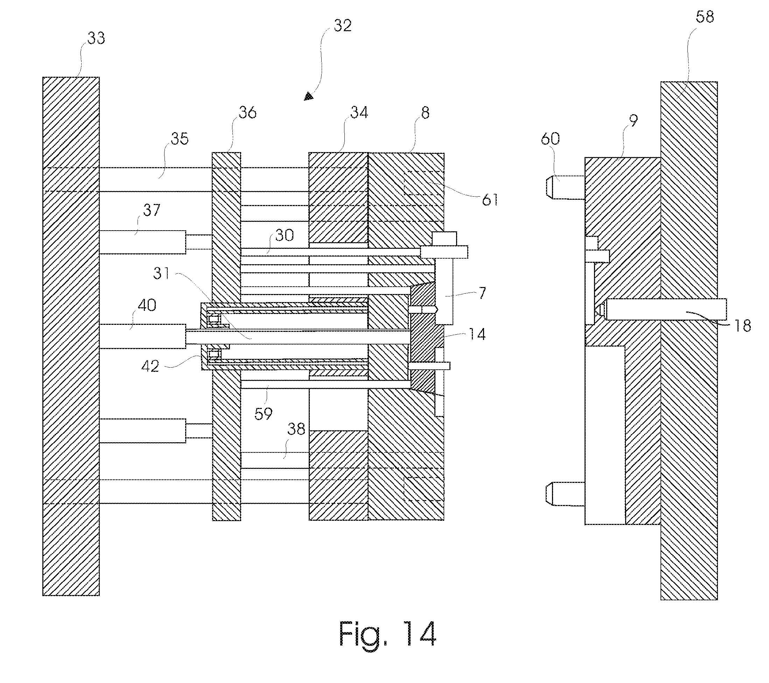

By retracting the movable platen of the injection-moulding machine, (not seen) has the mould, as seen in fig. 14, been opened. The ejector plate 36 is still placed in its rearward position.

In fig. 14 can also be seen a guidance tap 60 on the stationary mould half 9 and a corresponding guidance recess 61 in the movable mould half 8.

The guidance tap and guidance recess are engaging each other when closing the mould and serves thereby to register the mould halves securely in relation to each other.

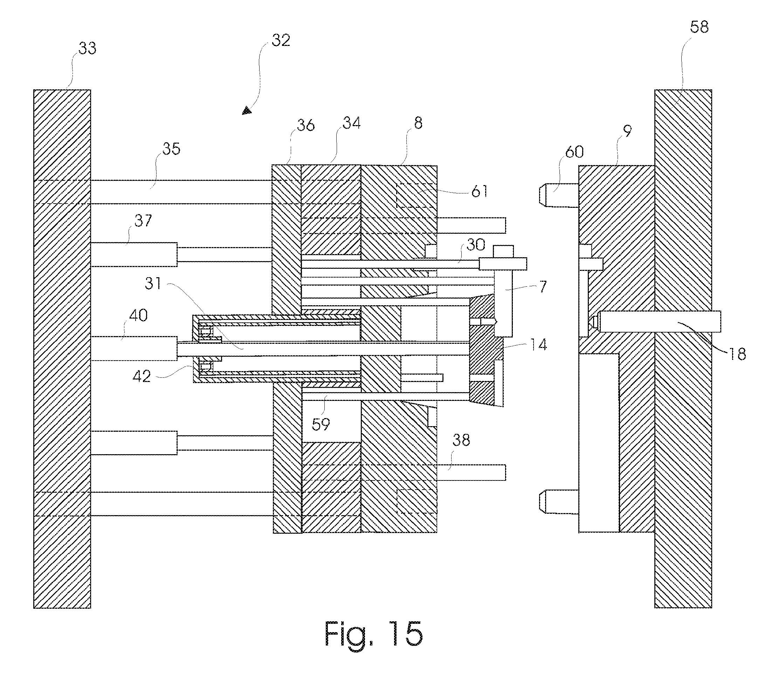

In fig. 15 have the pneumatic cylinders 37 pushed the ejector plate 36 forwards to its forward position whereby the ejector pins 36 and the ejector pins 28, seen in fig. 7, have ejected the second integral unit 7 and the first integral unit 6 at the same time as the ejector pins 59 have ejected the carrier 14.

The first and second component 2 and 3 are now fully free of their respective cavities 10 and 11 so that only the support member 4 supports them in the shown ejected state.

The support member is however able securely to support the components since the support member itself securely is attached to the carrier by means of the anchor pin 5 anchored in the bore 26 in the carrier 14. See also fig. 7 and 8.

The ejector pins are still touching the carrier and the integral units.

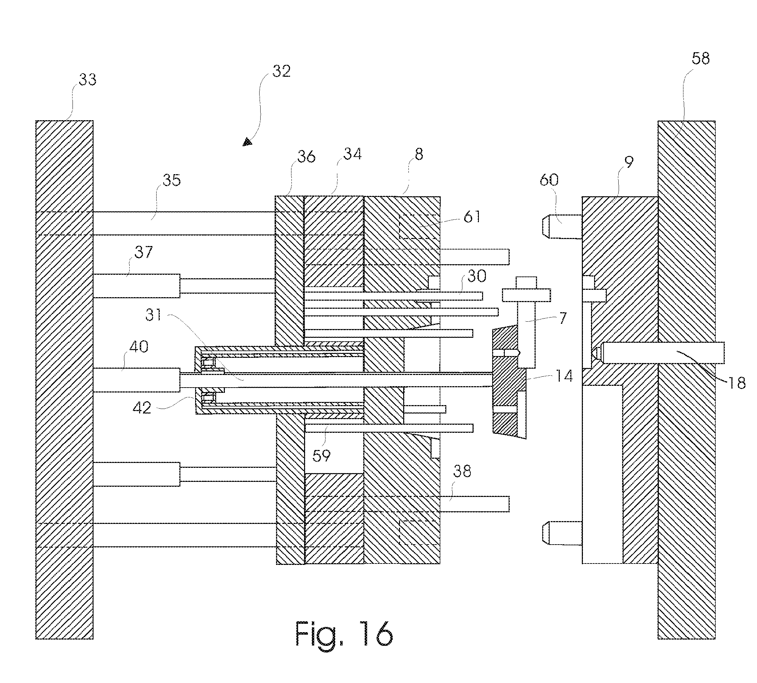

In fig. 16 has the hydraulic cylinder 40 been activated whereby the drive shaft 31 has pushed the carrier 14 free of all ejector pins so that the carrier now freely can be turned.

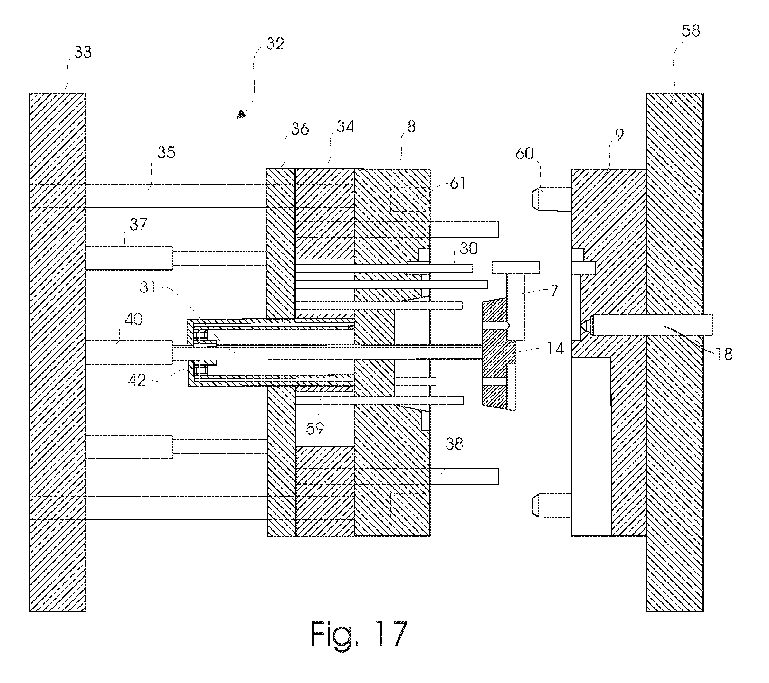

This turning operation has taken place in fig. 17 where the previously mentioned turning arrangement has turned the drive shaft 31 and thereby the carrier 14 with the support member 14 an angle which by way of example could be 89,5° only while a correct moulding operation requires the carrier to be turned at all 90°.

The remaining 0,5° is turned during closing the mould where the surface of the conical taps 15 on the stationary mould half 9 abuts the surface of the conical recesses in the movable mould half as shown in fig. 6.

The mould halves are thereby lined precisely up in relation to each other each time the mould is closed so that identical articles of high quality always are produced.

Above is described and on the drawing shown that the article to be produced by the moulding arrangement of the invention is composed of two components.

Within the scope of the invention can the article also be composed of more components, for example three components.

In this case will the mould comprise three cavities for moulding three integral units.

The support member can also at the same time support components to more articles, which also doesn't need to be identical.

## Claims

1. A moulding arrangement for at each stroke of an injection-moulding machine, in which an injection mould (8,9) is mounted, moulding at least one article (1), which is composed of components (2,3) made of different materials by injecting the materials into cavities (10,11) formed in the mould, **characterized in**
- **that** the mould (8,9) in closed position comprises a number of cavities (10,11) corresponding each to the shape of one or more of the components (2,3),
- **that** at least identical cavities (10,11) are separated by angular distances and placed at equal distances from a central axis of the mould (8,9),
- **that** parts of the cavities (10,11) are formed in a separately movable section (14) of the movable mould half (8), and
- **that** the moulding arrangement comprises an operation part (32) for displacing said separately movable section (14) to-and-fro between closed and open positions of the mould (8,9) and in open positions to turn the section (14) about said central axis angles corresponding to the angles between the cavities (10,11) so that the cavities (10,11) in the section (14) together with cavity halves (10',11'; 10'',11'') in the remainder of the movable mould half (8) and in the stationary mold half (9) form whole cavities (10,11) in the mold (8,9) in its closed positions.

2. A moulding arrangement according to claim 1, **characterized in that** the separately movable section (14) of the movable mould half (8) is formed as a movable carrier (14) for a support member (4) which releasable is attached to the carrier (14) and during an operation cycle is supporting the moulded components (2,3) and articles (1).

3. A moulding arrangement according to claim 2 where the article (1) is composed of at least one first component (2) made of a first material and at least one second component (3) made of a second material, **characterized in that** the mould (8,9) is formed with a first cavity (10) for moulding a first integral unit (6) consisting of the at least first component (2) and the support member (4) and with a second cavity (11) for moulding a second integral unit (7) consisting of the first integral unit (6) and the at least second component (3).

4. A moulding arrangement according to claim 3, **characterized in that** the moulding arrangement comprises at least one first injection nozzle (17) for injecting the first material directly into the first cavity (10) during each stroke of the injection-moulding machine and of at least one second injection nozzle (18) for simultaneously injecting the second material directly into the second cavity (11).

5. A moulding arrangement according to claim 4, **characterized in that** each injection nozzle (17) and (18) are arranged for injecting the first and second material directly into that part of the respective cavities (10) and (11) which corresponds to the shape of the support member (4).

6. A moulding arrangement according to claim 4 or 5, **characterized in that** each injection nozzle (17) and (18) is a heat runner.

7. A moulding arrangement according to claim 4, 5 or 6, **characterized in that** the support member (4) is arranged as sprue for allowing the first material from the first nozzle (17) to be supplied to that part of the first cavity (10), which corresponds to the first component (2), and as sprue for allowing the second material from the second nozzle (18) to be supplied to that part of the second cavity (11), which corresponds to the second component (3).

8. A moulding arrangement according to any of the preceding claims 3 - 7, **characterized in that** the operation part (32) comprises an axially displaceable ejector plate (36) with ejector pins (28,30) for in the open position of the mould (8,9) ejecting the first and second moulded integral unit (6,7) from the movable mould half (8) but not the support member (4) from the carrier (14).

9. A moulding arrangement according to any of the preceding claims 2 - 8, **characterized in that** the operation part (32) comprises an axially displaceable drive shaft (31) that is connected to the carrier (14).

10. A moulding arrangement according to claim 9, **characterized in that** the operation part (32) is adapted to displace the drive shaft (31) in the open position of the mould (8,9) towards the stationary mould half (9) so that the carrier (14) is placed between the two mould halves (8,9) in a position where the support members (4) on the carrier (14) have brought the integral units (6,7) beyond the reach of the ejector pins (28,30).

11. A moulding arrangement according to claim 9 or 10, **characterized in that** the operation part (32) comprises a gearwheel rim (43) mounted upon the drive shaft and a toothed bar meshing with the gearwheel rim (43).

12. A moulding arrangement according to claim 11, **characterized in that** the gearwheel rim (43) is mounted upon the drive shaft (31) via a free-wheeling hub (46) adapted to allow the gearwheel rim (43) to turn the drive shaft (31) into one angle direction but not into the opposite angle direction.

13. A moulding arrangement according to claim 11 or 12, **characterized in that** that the free wheeling hub (46) is arranged as a free wheeling roller bearing (46).

14. A moulding arrangement according to claim 11, 12 or 13, **characterized in that** that the operation part (32) of the moulding arrangement comprises a tubular sleeve (42) whereby the gearwheel rim (43) turnable is placed in said tubular sleeve (42) with the teeth (44) of the gearwheel rim (43) slidingly abutting the inner side (45) of the sleeve (42).

15. A moulding arrangement according to claim 14, **characterized in that** a transverse opening (54) is cut in the wall (53) of the tubular sleeve (42) for allowing the toothed bar (55) to mesh with the gearwheel rim (43).

16. A moulding arrangement according to any of the preceding claims 2 - 15, **characterized in that** the operation part (32) of the moulding arrangement is adapted to turn the carrier (14) lesser than the angle between neighboring cavities (10,11) in the mould (8,9) whereby the remainder of the turning operation is performed by means of at least one conical tap (15) which is mounted upon the stationary mould (9) and is engaging a corresponding recess (16) formed in the carrier (14) when closing the mould (8,9).

17. A method for producing an article (1) composed of a first and a second component (2,3) made of each their material by means of the moulding arrangement according to any of the preceding claims 1 - 16, **characterized in that** the method comprises the steps of in each operation cycle,
- injecting the material into cavities (10,11) of the closed mould (8,9),
- opening the mould (8,9),
- ejecting a first and second integral unit (6,7) from the movable mould half (8) without ejecting a support member (4) from the carrier (14),
- displacing the carrier (14) a distance further than ejector pins (28,30) of an axially displaceable ejector plate (36),
- turning the carrier (14) at least a part of an angle corresponding to the angle between neighboring cavities (10,11) in the mould (8,9),
- closing the mould (8,9), and
- ejecting the support member (4) from the mould (8,9) during closing the mould.

18. A method according to claim 17, **characterized in** simultaneously
- moulding the first integral unit (6),
- moulding the second integral unit (7), and
- severing the article from the second integral unit (7) during closing the mould (8,9).

19. A method according to claim 17 or 18, **characterized in that** the material is injected directly into the cavities (10,11) of the mould.

20. A method according to claim 19, **characterized in that** the material is injected directly into that part of the respective cavities (10) and (11) of the mould which corresponds to the shape of the support member (4).
